# FASCICULE DE BREVET EUROPEEN

(11) **EP 0 624 064 B1**
(45) Date de publication et mention de la délivrance du brevet: **01.10.1997**
(21) Numéro de dépôt: 93901075.7
(22) Date de dépôt: 19.01.1993
(51) Int. Cl.: A23L 3/18, A23L 3/015, A23B 7/005, A23B 4/005, A23L 1/01

(54) **PROCEDE ET DISPOSITIFS POUR LE TRAITEMENT D'ALIMENTS FRAIS**
VERFAHREN UND VORRICHTUNG ZUR BEHANDLUNG VON NAHRUNGSMITTELN
FRESH FOOD PROCESSING METHOD AND DEVICES

(30) Priorité: 31.01.1992 BE 9200108
(43) Date de publication de la demande: 17.11.1994
(73) Titulaire: THIENPONT, Bernard, B-9700 Oudenaarde (BE)
(72) Inventeur: THIENPONT, Bernard, B-9700 Oudenaarde (BE)
(74) Mandataire: Van Malderen, Joelle
(86) Numéro de dépôt international: BE9300003
(87) Numéro de publication internationale: WO9314651

(56) Documents cités:
- EP-A- 0 006 369
- CA-A- 975 976
- FR-A- 2 635 167
- FR-A- 2 656 547
- US-A- 2 083 293
- US-A- 4 543 263

## Description

### Objet de l'invention

La présente invention concerne un procédé pour le traitement d'aliments frais en grandes quantités et en vrac tels que des fruits et des légumes mais également d'autres types d'aliments comme les pâtes, le poisson, la viande, etc. afin d'assurer leur conservabilité pour une longue période tout en maintenant leurs caractéristiques organoleptiques. L'invention s'étend aussi aux dispositifs pour la mise en oeuvre de ce procédé.

### Arrière-plan technologique

Les techniques habituelles de conservation par pasteurisation ou stérilisation visent à rendre conservables des produits sur une longue période tout en essayant de maintenir leur goût et leur aspect.

La difficulté principale réside dans le fait que les produits sont habituellement chauffés par contact direct, c'est-à-dire par conduction ou par convection et le plus souvent à des températures élevées et pendant des périodes longues ce qui fait perdre au produit une partie de ses propriétés organoleptiques et physico-chimiques.

A titre d'exemple, envisageons le cas particulier des techniques de conservation des fruits. Pour la plupart des procédés connus s'appliquant à la conservation des fruits, on obtient après le traitement par la chaleur des morceaux de fruits, une purée ou compote de fruits qui ne convient pas à la plupart des utilisations industrielles ou ménagères courantes, et en particulier la pâtisserie.

On connaît dans l'état de la technique différents procédés de conservation ou de cuissons d'aliments qui tentent de remédier à ce problème.

En particulier le document FR-A-2635167 décrit un appareil pour le traitement des produits à la vapeur dans une enceinte sous pression ou sous vide. Même si les produits sont apparemment traités en vrac, il semble qu'il soit nécessaire de les disposer par exemple sur des clayettes ou des chariots pour effectuer le traitement dans l'appareil.

En outre, ce traitement ne peut s'effectuer en aucun cas de manière continue ou semi-continue. En effet il convient d'arrêter l'appareil pour introduire les aliments dans l'enceinte sous pression ou sous vide.

Le document EP-A-0006369 décrit un procédé pour le traitement thermique en continu de produits en vrac, nus ou emballés dans un caisson dans lequel on fait le vide; puis on casse ce vide par un apport extérieur de vapeur. Cette étape a pour conséquence de mettre le caisson sous pression.

Le document CA-A-975976 décrit un procédé de cuisson d'aliments qui prévoit d'amener l'eau à ébullition dans un récipient clos, de chasser l'air et une partie de la vapeur créée de ce récipient de manière à obtenir un vide partiel dans celui-ci, d'effectuer la cuisson sous vide partiel et de supprimer ce vide partiel avant d'enlever les aliments du récipient. Ce procédé décrit ne permet bien entendu pas un traitement continu ou semi-continu. A nouveau il convient d'arrêter totalement la machine avant d'extraire les aliments.

Le document US-A-4543263 décrit un appareil et un procédé destinés à chauffer et à refroidir de manière continue des aliments, pour lesquels la chambre de traitement à la vapeur est sous pression.

### Buts de l'invention

L'invention vise à proposer un procédé de conservation des aliments frais qui évite les inconvénients des solutions de l'état de la technique et plus particulièrement vise à développer une méthode de traitement qui offre les meilleures garanties de conserver les caractéristiques organoleptiques et physico-chimiques du produit traité.

En particulier, on souhaite obtenir un procédé qui fonctionne de manière continue ou semi-continue et qui permet d'emballer directement les aliments traités à la sortie du dispositif de traitement.

Le procédé selon l'invention est destiné plus précisément à ce qu'on appelle des techniques de "aseptic filler" ou de "hot filler" que l'on peut traduire en français par techniques de remplissage aseptique ou d'auto-pasteurisation, sans refroidissement.

L'invention porte en outre sur des dispositifs (installations) pour la mise en oeuvre dudit procédé.

### Principaux éléments caractéristiques de l'invention

La présente invention se rapport à un dispositif pour la conservation d'aliments frais en vrac par traitement thermique, caractérisé en ce qu'il comprend une cuve dans laquelle les aliments sont introduits et chauffés par la condensation d'une vapeur se déplaçant en sens inverse au sens de déplacement des aliments, se composant d'une enceinte supérieure reliée à une pompe à vide via un condensateur dans laquelle règne une pression constante inférieure à la pression atmosphérique et d'un ou plusieurs logements inférieurs séparés de l'enceinte par des grilles perforées et dans lesquels règne une pression supérieure à la pression régnant dans l'enceinte supérieure ainsi qu'un sas destiné à introduire les aliments dans la cuve et une pompe volumétrique disposée à la sortie de la cuve par laquelle les produits peuvent être évacués hors de celle-ci.

De préférence, il comporte également un débitmètre par lequel du jus provenant d'un réservoir est introduit dans le ou les logements disposés entre le fond de la cuve et les plaques perforées.

Le jus est chauffé via une double paroi elle-même chauffée par une circulation de vapeur provenant d'un circuit extérieur.

En outre, ce dispositif comprend, selon une forme d'exécution préférée, des capteurs ou senseurs qui contrôlent le fonctionnement du système.

La présente invention se rapporte également à un procédé pour la conservation d'aliments frais en vrac par un traitement thermique dans lequel on introduit les aliments sous dépression par le dispositif décrit ci-dessus en soumettant ces aliments à un courant de vapeur inverse à leur sens de déplacement, la vapeur se condensant sur les aliments en leur fournissant ainsi une partie de la chaleur nécessaire à leur échauffement.

Ce procédé peut être sous forme semi-continue ou continue, et sera exécuté sans apport extérieur de vapeur, la vapeur étant générée à partir de l'eau libérée des aliments et à partir d'un jus nécessaire au remplissage aseptique.

### Brève description des figures

- - La figure 1: représente une vue schématique du dispositif selon l'invention, permettant la mise en oeuvre du procédé.
- - La figure 2: représente une vue détaillée de la cuve en dépression selon la figure 1.
- - La figure 3: représente une vue schématique d'un autre dispositif préféré de l'invention correspondant à une variante d'exécution du procédé.
- - La figure 4: représente une vue schématique d'un autre dispositif préféré de l'invention correspondant à une autre variante d'exécution du procédé.

On utilise les mêmes repères numériques dans les différentes figures pour représenter des éléments identiques ou similaires.

### Description détaillée de plusieurs modes d'exécution préférés de l'invention

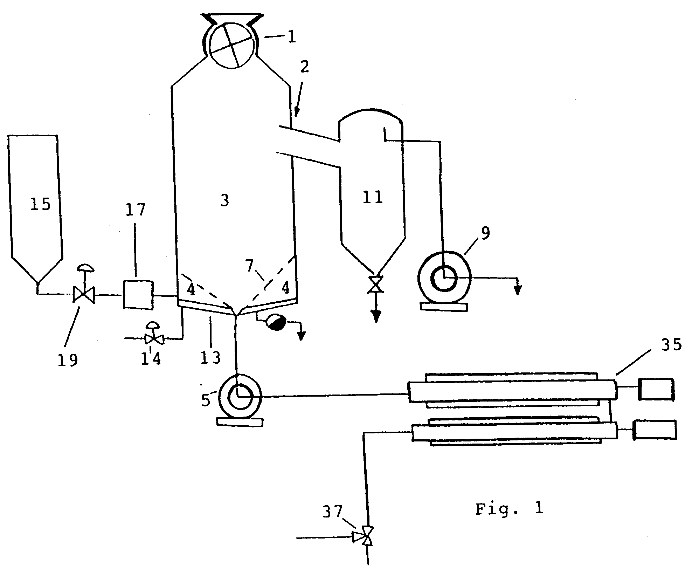

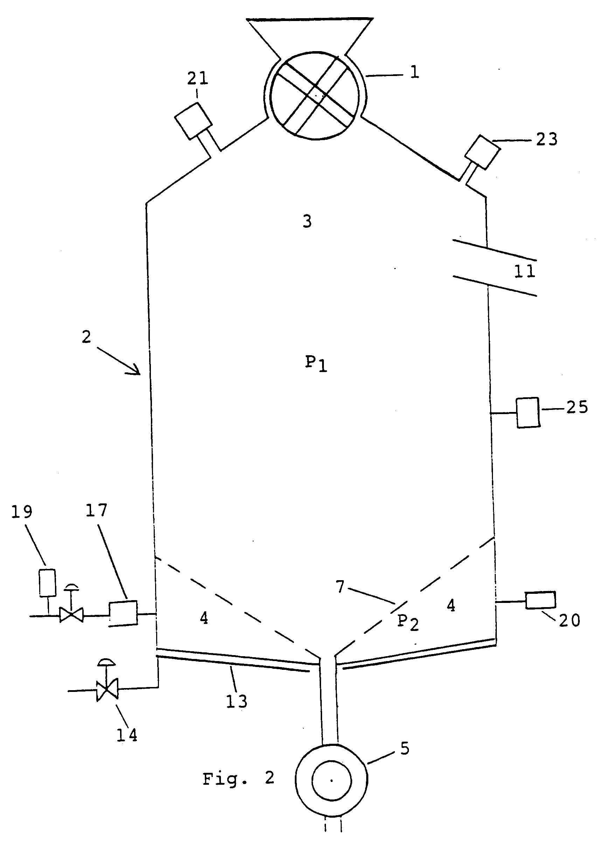

Ainsi que cela apparait dans les figures 1 et 2, les aliments par exemple des fruits, sont introduits dans une cuve en dépression par rapport à la pression atmosphérique et portant le repère général 2, par l'intermédiaire d'un sas 1 qui fonctionne par compartimentage.

De préférence, ce sas 1 qui est destiné à introduire les aliments dans la cuve 2 est équipé d'un motovariateur et d'un transformateur de fréquence qui est accouplé à une pompe volumétrique 5 disposée à la sortie de la cuve 2 et qui évacue le produit hors de celle-ci.

La cuve en dépression 2 se compose essentiellement d'une enceinte supérieure 3 et de un ou plusieurs logements inférieurs 4 séparés de l'enceinte 3 par des grilles perforées 7.

L'enceinte 3 est reliée via un condensateur 11 à une pompe à vide 9.

Ce condensateur 11 peut fonctionner selon différents modes. Par exemple la condensation peut être obtenue en aspergeant de préférence des gouttelettes d'eau dans le condensateur ou bien une canalisation d'eau froide est directement adaptée au condensateur et relié à une pompe à vide de préférence une pompe à eau annulaire en inox.

Le fonctionnement du sas 1 implique nécessairement qu'il y ait toujours une entrée d'air par le sas lui-même et par conséquent une perte de dépression. La pompe doit être en mesure de compenser constamment cette perte de dépression de manière à obtenir une pression constante P₁ (inférieure à la pression atmosphérique Pₐ) dans l'enceinte 3 lorsque l'appareil est en fonctionnement.

Le jus provenant d'un réservoir 15 est introduit dans la cuve en dépression 2 via un débitmètre 17 qui régule l'arrivée du jus à l'aide d'une vanne différentielle 19.

Plus précisément, ce jus qui est destiné au remplissage des récipients de conservation (boîte ou sachet) lors du jutage, est introduit dans le ou les logements 4 disposés entre le fond de la cuve 2 et les plaques perforées 7. Ce jus est chauffé via une double paroi 13 qui est elle-même chauffée par une circulation de vapeur provenant d'un circuit extérieur 14.

D'autres moyens de chauffage ne sont bien entendus pas exclus.

Par conséquent dans le ou les logements 4 délimités par les plaques perforées 7 il règne une pression P₂ qui est supérieure à P₁ régnant dans l'enceinte supérieure 3, c'est-à-dire que la dépression régnant dans le logement 4 est moins importante que celle de l'enceinte 3.

De ce fait, il existe un mouvement de vapeur qui est constamment formée à partir du jus provenant du logement 4 vers l'enceinte supérieure 3 au travers des plaques perforées 7. Cette vapeur se condense au contact de l'aliment qui est à une température inférieure, lui fournissant ainsi l'apport de chaleur nécessaire à la pasteurisation de l'aliment.

En outre, les aliments qui se trouvent dans les couches les plus élevées de l'enceinte supérieure 3 sont débarrassés de l'oxygène se trouvant dans leurs tissus du fait de la dépression P₁ régnant dans cette enceinte.

A mesure que l'aliment descend dans la cuve en dépression 2, celui-ci est chauffé de manière constante couche par couche, par condensation de vapeur.

A un niveau déterminé, l'aliment arrive en contact avec le jus et est aspiré par la pompe volumétrique 5 et quitte alors la cuve en dépression 2. On évite ainsi le "floating" lors de l'aspiration de l'aliment avec le jus et on obtient de cette manière un mélange parfait des morceaux d'aliments comme les fruits avec le jus.

Le produit est ensuite pompé vers un échangeur à surface raclée 35 avant d'atteindre une unité de traitement "holding" 37 ou s'effectue la stérilisation et une unité de refroidissement non représentée avant le remplissage aseptique de sachets par exemple.

On peut utiliser tout autre type d'échangeur de chaleur en lieu et place d'un échangeur à surface raclée.

Le dispositif comprend également plusieurs senseurs ou capteurs qui sont destinés à contrôler son fonctionnement.

Dans la partie supérieure de la cuve en dépression 2, on a disposé un capteur de pression électronique 23 et une vanne de sécurité 21 qui permet d'évacuer la vapeur en excès lorsque l'on atteint un pic de surpression trop élevé.

De préférence, ce capteur 23 va directement commander l'arrivée de vapeur dans le circuit externe 14 qui chauffe la double paroi 13 et ceci en fonction des données fournies en autre par un capteur de température 25.

On peut également prévoir un capteur de sécurité 20 qui contrôle la présence de jus sur la double paroi 13.

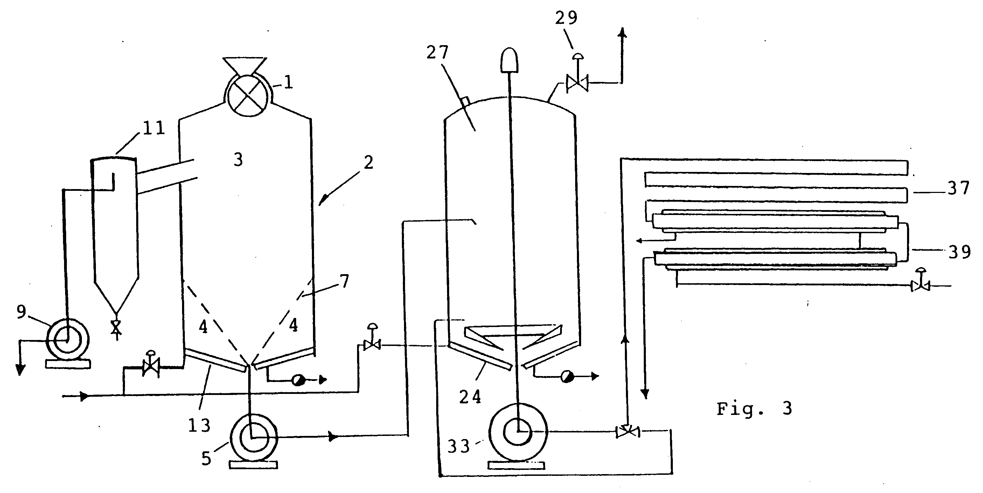

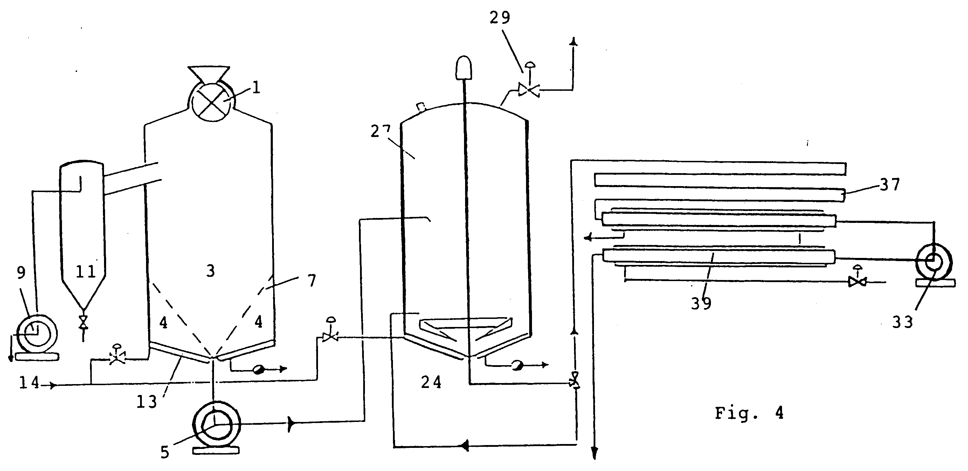

Selon une seconde forme d'exécution préférée de la présente invention, des aliments présentant un PH supérieur à 4 tels que la viande, les légumes, les poissons, etc, peuvent être traités dans un dispositif décrit aux figures 3 et 4.

Dans ce cas, la température de stérilisation est supérieure à 100°C, et ainsi que représenté à la figure 3, les aliments sont aspirés à la sortie de la cuve en dépression 2 par une pompe volumétrique 5 avant d'être introduits dans une seconde enceinte 27 qui est sous pression. Dans cette enceinte la pression est plus élevée dans la partie inférieure que dans la partie supérieure. Cette enceinte est également chauffée par l'intermédiaire d'une double paroi 24 qui est elle-même chauffée à l'aide de vapeur provenant du circuit extérieur 14. De cette manière on atteint aisément des températures supérieures à 110°C.

Ensuite les aliments sont aspirés par une pompe à barrière de vapeur 33 située en dessous de l'enceinte 27 sous pression et sont envoyés vers l'unité de traitement 37 et l'étage de refroidissement 39 avant d'effectuer un remplissage aseptique.

Cette disposition est de préférence utilisée pour des aliments qui présentent une température de stérilisation comprise entre 100 et 115°C.

Pour des aliments exigeant une température plus élevée (supérieur à 115°C), on placera de préférence la pompe 33 entre différents étages de refroidissement 39 et par conséquent à un endroit où la température a déjà diminuée, par exemple atteint les 100°C (voir figure 4).

L'avantage principal de cette disposition est que le produit n'est plus aussi décomposable et donc vulnérable lors du pompage par la pompe 33. Dans ce cas, il convient de noter qu'il n'est pas nécessaire que la pompe 33 fonctionne en synchronisation avec la pompe volumétrique 5.

## Revendications

1. Dispositif pour la conservation d'aliments frais en vrac par traitement thermique, caractérisé en ce qu'il comprend une cuve (2) dans laquelle les aliments sont introduits et chauffés par la condensation d'une vapeur se déplaçant en sens inverse au sens de déplacement des aliments, se composant d'une enceinte supérieure (3) reliée à une pompe à vide (9) via un condensateur (11) dans laquelle règne une pression constante inférieure à la pression atmosphérique et d'un ou plusieurs logements inférieurs (4) séparés de l'enceinte (3) par des grilles perforées (7) et dans lesquels règne une pression (P₂) supérieure à la pression (P₁) régnant dans l'enceinte supérieure (3) ainsi qu'un sas (1) destiné à introduire les aliments dans la cuve (2) et une pompe volumétrique (5) disposée à la sortie de la cuve (2) par laquelle les produits peuvent être évacués hors de celle-ci.

2. Dispositif selon la revendication 1, caractérisé en ce qu'il comporte un débitmètre (17) par lequel du jus provenant d'un réservoir (15) est introduit dans le ou les logements (4) disposés entre le fond de la cuve (2) et les plaques perforées (7).

3. Dispositif selon la revendication 2, caractérisé en ce que ce jus est chauffé via une double paroi (13) elle-même chauffée par une circulation de vapeur provenant d'un circuit extérieur (14).

4. Dispositif selon l'une quelconque des revendications précédentes, caractérisé en ce que ce dispositif comprend également des capteurs ou senseurs (20, 21, 23 et 29) qui contrôlent le fonctionnement du système.

5. Dispositif selon l'une quelconque des revendications précédentes, caractérisé en ce que le dispositif comprend à la suite de la cuve en dépression (2) et de la pompe volumétrique (5), une enceinte sous pression (27).

6. Dispositif selon la revendication 5, caractérisé en ce qu'il comprend une seconde pompe (33) qui aspire le produit hors de l'enceinte sous pression (27).

7. Dispositif selon la revendication 6, caractérisé en ce que la pompe (33) est disposée entre deux étages de refroidissement d'une unité de refroidissement (35).

8. Dispositif selon la revendication 6, caractérisé en ce que la pompe (33) est disposée à la sortie de l'enceinte sous dépression (27) et avant l'étage de refroidissement (35).

9. Procédé pour la conservation d'aliments frais en vrac par un traitement thermique, caractérisé en ce qu'on introduit les aliments sous dépression par le dispositif selon l'une quelconque des revendications 1 à 8 en soumettant ces aliments à un courant de vapeur inverse à leur sens de déplacement, la vapeur se condensant sur les aliments en leur fournissant ainsi une partie de la chaleur nécessaire à leur échauffement.

10. Procédé selon la revendication 9, caractérisé en ce qu'il se présente sous forme d'un procédé semi-continu ou continu.

11. Procédé selon la revendication 9 ou 10, caractérisé en ce que le procédé est exécuté sans apport extérieur de vapeur, la vapeur étant générée à partir de l'eau libérée des aliments et à partir d'un jus nécessaire au remplissage aseptique.

## Claims

1. Device for preservation of bulk fresh foodstuffs by heat treatment, characterized in that it comprises a vessel (2) in which the foodstuffs are introduced and heated by the condensation of steam moving in a direction opposite to that of the foodstuffs, comprising an upper chamber (3) which is connected via a condenser (11) to a vacuum pump (9) in which the constant pressure is lower than the atmospheric pressure, and one or more lower housings (4) separated from the enclosure (3) by perforated grids (7) and in which a pressure prevails (P₂) which is higher than the pressure (P₁) prevailing in the upper chamber (3), and an airlock (1) intended to introduce the foodstuffs into the vessel (2) and a positive displacement pump (5) arranged at the exit of the vessel (2) and which removes the product therefrom.

2. Device according to claim 1, characterized in that it comprises a flowmeter (17) through which the covering liquid coming from a tank (15) is introduced into the housing(s) (4) arranged between the bottom of the vessel (2) and the perforated plates (7).

3. Device according to claim 2, characterized in that the covering liquid is heated via a double wall (13) itself heated by a circulation of steam coming from an external circuit (14).

4. Device according to any of the preceding claims characterized in that this device also comprises sensors or detectors (20, 21, 23 and 29) which monitor the operation of the system.

5. Device according to any of the preceding claims, characterized in that the device comprises, following the reduced-pressure vessel (2) and the positive displacement pump (5), a pressurized chamber (27).

6. Device according to claim 5, characterized in that it comprises a second pump (33) which sucks the product out of the pressurized chamber (27).

7. Device according to claim 6, characterized in that the pump (33) is arranged between two cooling stages of a cooling unit (35).

8. Device according to claim 6, characterized in that the pump (33) is located at the exit of the pressurized chamber (27) and before the cooling stage (35).

9. Method for preservation of bulk fresh foodstuffs by heat treatment, characterized in that the foodstuffs are introduced under reduced pressure through the device according to any of the claims 1 to 8 by subjecting these foodstuffs to a flow of steam in a direction opposite to that of their movement, the steam condensing on the foodstuffs while thus providing them with a part of the heat needed for their heating.

10. Method according to claim 9, characterized in that it is in the form of a semicontinuous or continuous method.

11. Method according to claim 9 or 10, characterized in that the method is carried out without external supply of steam, the steam being generated from the water released from the foodstuffs and from a covering liquid necessary for aseptic filling.

## Patentansprüche

1. Vorrichtung zur Konservierung von losen frischen Nahrungsmitteln durch eine Wärmebehandlung, dadurch gekennzeichnet, daß sie einen Behälter (2) aufweist, in den die Nahrungsmittel eingebracht werden, und in dem sie durch Kondensation von Dampf, der sich in der zu der Fortbewegungsrichtung der Nahrungsmittel entgegengesetzten Richtung fortbewegt, erhitzt werden, und der gebildet wird von einer oberen Umhüllung (3), die über einen Kondensator (11), in dem ein konstanter Druck herrscht, der niedriger als der Atmosphärendruck ist, mit einer Vakuumpumpe (9) verbunden ist, und einem oder mehreren unteren Fächern (4), die von der Umhüllung (3) durch perforierte Roste (7) getrennt sind, und in denen ein Druck (P₂) herrscht, der höher als der in der oberen Umhüllung (3) herrschende Druck (P₁) ist, sowie eine Schleuse (1) aufweist, die dazu bestimmt ist, die Nahrungsmittel in den Behälter (2) einzubringen, und eine an dem Ausgang des Behälters (2) angeordnete Dosierpumpe (5) aufweist, durch die die Produkte aus dem Behälter (2) abgeführt werden können.

2. Vorrichtung gemäß Anspruch 1, dadurch gekennzeichnet, daß sie einen Strömungsmesser (17) umfaßt, über den Saft aus einem Vorratsbehälter (15) in die zwischen dem Boden des Behälters (2) und den perforierten Platten (7) angeordneten Fächer (4) eingeleitet wird.

3. Vorrichtung gemäß Anspruch 2, dadurch gekennzeichnet, daß der Saft über eine doppelte Wand (13) erhitzt wird, die selbst durch Umwälzung von Dampf aus einem externen Kreis (14) erhitzt wird.

4. Vorrichtung gemäß irgendeinem der vorhergehenden Ansprüche, dadurch gekennzeichnet, daß sie außerdem Meßwertgeber oder Fühler (20, 21, 23 und 29) aufweist, die den Betrieb des Systems steuern.

5. Vorrichtung gemäß irgendeinem der vorhergehenden Ansprüche, dadurch gekennzeichnet, daß sie nach dem unter Unterdruck stehenden Behälter (2) und der Dosierpumpe (5) eine unter Druck stehende Umhüllung (27) aufweist.

6. Vorrichtung gemäß Anspruch 5, dadurch gekennzeichnet, daß sie eine zweite Pumpe (33) aufweist, die das Produkt aus der unter Druck stehenden Umhüllung (27) absaugt.

7. Vorrichtung gemäß Anspruch 6, dadurch gekennzeichnet, daß die Pumpe (33) zwischen zwei Kühlstufen einer Kühleinheit (35) angeordnet ist.

8. Vorrichtung gemäß Anspruch 6, dadurch gekennzeichnet, daß die Pumpe (33) an dem Ausgang der unter Unterdruck stehenden Umhüllung (27) und vor der Kühleinheit (35) angeordnet ist.

9. Verfahren zur Konservierung von losen frischen Nahrungsmitteln durch eine Wärmebehandlung, dadurch gekennzeichnet, daß die Nahrungsmittel unter Unterdruck durch die Vorrichtung gemäß irgendeinem der Ansprüche 1 bis 8 eingebracht werden und einem zu ihrer Fortbewegungsrichtung entgegengesetzten Dampfstrom unterworfen werden, wobei der Dampf auf den Nahrungsmitteln kondensiert und ihnen so einen Teil der für ihre Erhitzung erforderlichen Wärme liefert.

10. Verfahren gemäß Anspruch 9, dadurch gekennzeichnet, daß es ein halbkontinuierliches oder kontinuierliches Verfahren ist.

11. Verfahren gemäß Anspruch 9 oder 10, dadurch gekennzeichnet, daß es ohne externe Zuführung von Dampf ausgeführt wird, wobei der Dampf aus dem aus den Nahrungsmitteln freigesetzten Wasser, und aus einem für die aseptische Füllung erforderlichen Saft erzeugt wird.
